# EUROPEAN PATENT APPLICATION

(11) **EP 4 310 781 A1**
(43) Date of publication of application: **24.01.2024**
(21) Application number: 23185294.8
(22) Date of filing: 13.07.2023
(51) Int. Cl.: G06T 7/292

(54) **METHOD AND DEVICE FOR TARGET TRACKING, AND STORAGE MEDIUM**

(30) Priority: 22.07.2022 CN 202210870624
(71) Applicant: FUJITSU LIMITED, Kawasaki-shi, Kanagawa 211-8588 (JP)
(72) Inventor: ZHANG, Huigang, Beijing, 100027 (CN); WANG, Liuan, Beijing, 100027 (CN); SUN, Jun, Beijing, 100027 (CN)
(74) Representative: Hoffmann Eitle

(57) **Abstract**

A method for multi-target multi-camera tracking includes: performing multi-target tracking on an image sequence captured by each of a plurality of cameras, to extract a tracklet for each target appearing in the image sequence; extracting a feature for each of the plurality of tracklets extracted; calculating a similarity between any two of the plurality of tracklets based on the extracted features, to establish a similarity matrix; performing clustering based on the similarity matrix so that tracklets potentially related to a target are aggregated in a set; sorting the tracklets in the set in a temporal order to generate a tracklet sequence; filtering the tracklets in the set based on at least one of a similarity, a time distance, and a space distance between the tracklets; and using the tracklets in the filtered set as tracking information for the corresponding target.

## Description

### FIELD

The present disclosure generally relates to target tracking technology, and more specifically, to multi-target multi-camera tracking technology.

### BACKGROUND

The Multi-target Multi-camera Tracking technology is currently a very important research topic in the field of surveillance video. It refers to finding when and where multiple tracking targets are appearing in the videos captured by multiple cameras that capture different scenes respectively, and associating time information and location information of the same tracking target with said tracking target. The Multi-target Multi-camera Tracking technology integrates a number of computer vision technologies such as pedestrian detection, object detection, pedestrian re-identification, and target tracking.

However, conventional Multi-target Multi-camera Tracking technology typically uses only visual features and ignores the temporal and spatial relationship between cameras, which results in degraded performance. For example, in Reference [1], a pedestrian re-identification (Re-ID) technology is used to express features of targets, and the targets are associated and merged by comparing similarity of the features. Reference [2] further indicates that a high-quality Re-ID feature may better assist in the association of targets, and thereby proposes a new Re-ID feature. In both methods, a clustering operation is performed based on similarity of the features in order to merge targets that are appearing in videos of different cameras. In recent years, with the development of Graph Networks, some methods propose to represent a relationship between targets by a graph model, in order to associate and merge the targets. For example, Reference [3] provides a new dynamic graph model to represent the relationship between the targets, thereby associating similar targets.

However, in practical applications, the Multi-target Multi-camera Tracking technology still faces many problems and challenges. For example, differences in illumination condition between multiple cameras may affect the extraction of visual features, and occlusion of a target may lead to inaccurate visual features, and so on.

### REFERENCES:

[1] "Features for multi-target multi-camera tracking and re-identification", Ergys Ristani and Carlo Tomasi, Proceedings of IEEE Conference on Computer Vision and Pattern Recognition, pages 6036 - 6046, 2018.
[2] "State aware re-identification feature for multi-target multi-camera tracking", Peng Li, Jiabin Zhang, Zheng Zhu, Yanwei Li, Lu Jiang, and Guan Huang, IEEE Conference on Computer Vision and Pattern Recognition, 2019.
[3] "Dyglip: A dynamic graph model with link prediction for accurate multi-camera multiple object tracking", Kha Gia Quach, Pha Nguyen, Huu Le, Thanh Dat Truong, Chi Nhan Duong, Minh Triet Tran, and Khoa Luu, arXiv: Computer Vision and Pattern Recognition, 2021.

### SUMMARY

To address the above problems, the present disclosure proposes a new multi-target multi-camera tracking technology based on a global optimization method. In addition to visual features, the present disclosure further introduces time information and space information, and introduces an optimization process after cross-camera association and merging.

A method for multi-target multi-camera tracking is provided according to one aspect of the present invention. The method includes: performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras; extracting a feature for each of the plurality of tracklets; calculating a similarity between any two of the plurality of tracklets based on the extracted features, to establish a similarity matrix; performing clustering based on the similarity matrix so that tracklets potentially related to a target are aggregated in a set, wherein the tracklets in the set are captured by the same camera or different cameras; sorting the tracklets in the set in a temporal order to generate a tracklet sequence; filtering the tracklets in the set based on at least one of a similarity, a time distance, and a space distance between the tracklets; and using the tracklets in the filtered set as tracking information for the corresponding target.

A device for multi-target multi-camera tracking is provided according to another aspect of the present invention. The device includes a memory storing a computer program, and a processor. The processor is configured to execute the computer program to perform operations of performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras; extracting a feature for each of the plurality of tracklets; calculating a similarity between any two of the plurality of tracklets based on the extracted features, to establish a similarity matrix; performing clustering based on the similarity matrix so that tracklets potentially related to a target are aggregated in a set, wherein the tracklets in the set are captured by the same camera or different cameras; sorting the tracklets in the set in a temporal order to generate a tracklet sequence; filtering the tracklets in the set based on at least one of a similarity, a time distance, and a space distance between the tracklets; and using the tracklets in the filtered set as tracking information for the corresponding target.

A non-transitory computer-readable storage medium storing a program is provided according to another aspect of the present invention. The program, when executed by a computer, causes the computer to perform the above method for multi-target multi-camera tracking.

### BRIEF DESCRIPTION OF THE DRAWINGS

Figure 1 schematically illustrates a conceptual diagram of a multi-target multi-camera tracking technology according to the present disclosure.
Figure 2 illustrates a flowchart of a method for clustering tracklets.
Figure 3 illustrates a flowchart of a method for filtering tracklets in a clustered set.
Figure 4 illustrates a flowchart of a multi-target multi-camera tracking method according to the present disclosure.
Figure 5 illustrates functional modules that implement the multi-target multi-camera tracking method.
Figure 6 is a block diagram illustrating an exemplary configuration of computer hardware that implements the present disclosure.

### DETAILED DESCRIPTION OF EMBODIMENTS

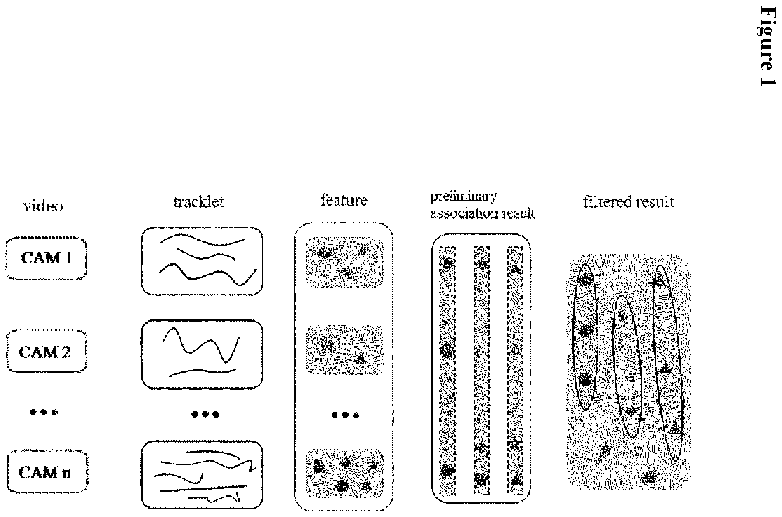

Figure 1 schematically illustrates a framework of a multi-target multi-camera tracking method according to the present disclosure. First, videos captured by multiple cameras CAM 1-CAM n, which capture different scenes respectively, are received. For a video from a single camera, a multiple-target tracking technology (MOT) may be utilized to extract tracklets for each target appearing in the video. It is possible to form a moving trajectory of a single target within a certain time period based on multiple tracklets of the target, thereby obtaining tracking information for the target. Since a moving trajectory of a target is typically distributed across a number of video frames, a tracklet may be a set of target boxes obtained by identifying the target in a plurality of frames. As an example, in the present disclosure tracklets of each target may be saved in one image folder.

Figure 1 schematically illustrates extraction of tracklets for three objects from a video of the camera CAM 1, with each curve representing a tracklet for one object, as is the case for videos captured by other cameras. In particular, tracklets extracted from videos of different cameras may correspond to the same object, as the same object may appear in different scenes and be captured by different cameras.

Since the multi-target single-camera tracking technology is a well-known technology in the art, detailed descriptions thereof are omitted in the present disclosure, and those skilled in the art may easily adopt an appropriate MOT technology to extract tracklets. As an example, a ByteTrack model is used in the present disclosure. The Bytetrack model is described in detail in "Bytetrack: Multi-Object Tracking by Associating Every Detection Box", Zhang, Y, Sun, P., et al., arXiv preprint arXiv: 2110.06864 (2021), and the content thereof is incorporated herein by reference.

Then, visual feature of each tracklet may be extracted by applying the pedestrian re-identification (Re-ID) technology. Since a tracklet may be a set of target boxes, the Re-ID technology may be used to extract visual features of respective target boxes. Therefore, the visual feature of the tracklet may be a set of the visual features of the respective target boxes. In Figure 1, features obtained for respective tracklets are schematically represented in different shapes.

In addition, as described above, the tracklets extracted from the videos of different cameras may correspond to the same object, and the visual features extracted for the tracklets may reflect characteristics of the object. Therefore, as shown in Figure 1, features (represented by triangle) corresponding to object A are extracted from the videos of cameras CAM 1, CAM 2, and CAM n, and features (represented by diamond) corresponding to object B are extracted from the videos of cameras CAM 1 and CAM n. The features represented by each of the shapes in Figure 1 correspond to one object, and features corresponding to the same object may be obtained based on videos captured by different cameras.

Since the Re-ID technology is known in the art, detailed description thereof is omitted in the present disclosure, and those skilled in the art may easily adopt an appropriate Re-ID technology to extract features. As an example, an OSNet model is used in the present disclosure. The OSNet model is described in detail in "Omni-Scale Feature Learning for Person Re-Identification", K. Zhou, Y. Yang., et al., ICCV, 2019, pages 3702-3712, and the content thereof is incorporated herein by reference.

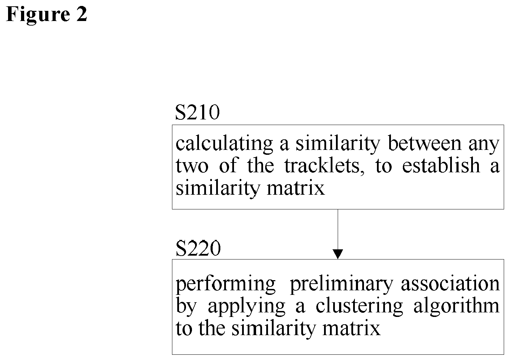

After extracting visual features for all tracklets obtained from the videos of all cameras CAM 1-CAM n, all tracklets are clustered based on the similarity of the features, so that tracklets potentially related to a certain target are aggregated in a set. The clustering will be described in detail below in conjunction with Figure 2.

The tracklets in a single set obtained through clustering may be captured by the same camera or different cameras, and they are grouped into the same set due to high visual similarity among them. The set may include tracklets of the same target in different camera videos. However, it should be noted that the clustering result is a preliminary cross-camera association for the target, and the accuracy thereof may not be satisfactory. For example, there may be tracklets corresponding to other targets in the set. Figure 1 schematically illustrates three sets (represented by dashed boxes) generated by clustering based on features of different shapes, and each set roughly corresponds to a feature of one shape, that is, roughly corresponding to one target. Since this is the preliminary cross-camera association, Figure 1 schematically illustrates the presence of features of different shapes in a single set.

As an example, an agglomerative clustering method is utilized in the present disclosure. However, those skilled in the art may easily use other known methods to perform clustering.

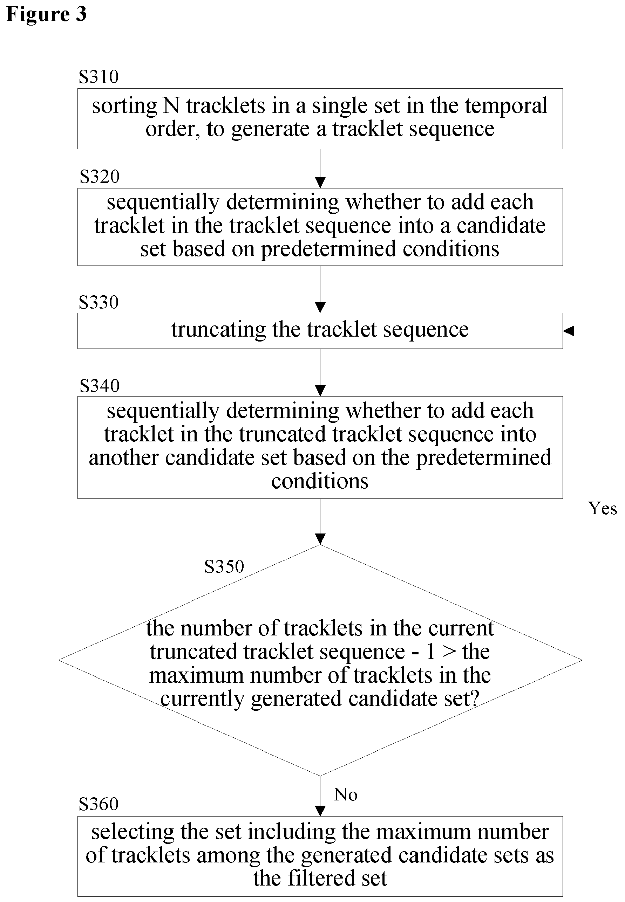

So far, due to the use of only visual features, the accuracy of the preliminary association result obtained is not high. In the present disclosure, tracklets in the preliminarily obtained set are filtered based on at least one of the similarity, temporal distance, and space distance between tracklets, in order to remove tracklets corresponding to other targets. The filtering operation will be described in detail below in conjunction with Figure 3.

Figure 1 schematically illustrates the filtered set (represented by solid circle). It can be seen that after filtering, a single set corresponds to a single type of features, that is, to a single target. The tracklets in the filtered set may be used as tracking information for the corresponding target. Tracking information for a target (for example, a person) is required in many fields such as security surveillance, transportation, and military affairs. In the present disclosure, tracklets corresponding to respective targets may be more accurately obtained through the filtering process, thereby improving the accuracy of multi-target multi-camera tracking.

Figure 2 illustrates a flowchart of a method for clustering tracklets based on similarity of visual features. In the case of obtaining m tracklets from videos of cameras CAM 1 - CAM n and extracting visual features for each of the tracklets, a similarity between any two tracklets is calculated based on visual features, and a similarity matrix S of m × m is established, as shown in step S210.

For two tracklets Ti and Tj, a similarity between Ti and Tj may be calculated by calculating similarities between a feature of each target box in the tracklet Ti and a feature of each target box in the tracklet Tj, selecting K largest similarities among the calculated similarities, and then calculating an average value of the selected K similarities. The average value is used as the similarity between the tracklet Ti and the tracklet Tj. In the present disclosure, instead of calculating an average value of all the obtained similarities, calculating the average value of the K largest similarities has the following advantages: deviations caused by other factors (for example, a size of the target and illumination) may be reduced by removing small similarities, and the same number of similarities being used for any two of the tracklets makes the algorithm more fair.

Then, in step S220, a clustering algorithm such as agglomerative clustering algorithm is applied to the similarity matrix S to obtain the preliminary association result as shown in Figure 1. Since the clustering algorithm such as the agglomerative clustering are known to those skilled in the art, detailed description thereof will be omitted in the present disclosure.

Figure 3 illustrates a flowchart of a filtering method for a set obtained through clustering. As shown in Figure 3, at step S310, N tracklets in the obtained set are sorted in a temporal order to generate a tracklet sequence, denoted as C={T1, T2, T3,..., TN}.

At step S320, it is sequentially determined whether to add each tracklet in the tracklet sequence C into a first candidate set based on predetermined conditions.

When the determination has been performed with respect to all tracklets in the tracklet sequence C, the tracklet sequence C is truncated at step S330. Specifically, the earliest tracklet (T1) in the tracklet sequence C is removed. The truncated tracklet sequence may be expressed as C '={T2, T3,..., TN}.

At step S340, it is sequentially determined whether to add each tracklet in the truncated tracklet sequence C' into a second candidate set based on the predetermined conditions.

When the determination has been performed with respect to all tracklets in the tracklet sequence C', it is determined whether a value obtained by subtracting 1 from the number of tracklets in the current sequence C' is greater than the larger one of the number of tracklets in the first candidate set and the number of tracklets in the second candidate set at step S350. If the determination result is "Yes", the truncation operation of step S330 is performed on the tracklet sequence C' to remove the earliest tracklet (T2) in the tracklet sequence C'. The further truncated tracklet sequence may be expressed as C"={T3,..., TN}. Step S340 is then performed for sequence C" to generate a third candidate set.

Steps S330-S350 are repeated in this manner, until the determination result of step S350 is "No", which means that a value obtained by subtracting 1 from the number of tracklets in the current sequence is less than or equal to the maximum number of tracklets in the currently generated candidate set. In this case, step S360 will be performed.

At step S360, the set including the maximum number of tracklets is selected among the currently generated candidate sets as the filtered set, that is, the filtered result as shown in Figure 1.

In addition, the predetermined conditions used in steps S320 and S340 may include the following three conditions, and it may be determined to add a tracklet into the corresponding candidate set as long as one of the three conditions is met. Specifically, it is determined whether a tracklet meets the conditions in the order of Condition 1, Condition 2, and Condition 3. When the previous condition is determined not to be met, it is determined whether the next condition is met.

Condition 1: a first similarity between a feature of the tracklet to be determined and an average feature of tracklets currently included in the corresponding candidate set is greater than a first threshold.

As an example, it is assumed that the tracklet to be determined is tracklet T5 in the truncated tracklet sequence {T2, T3, T4, T5,..., TN}, and that tracklets T2 and T4 out of the three tracklets preceding T5 have been added into the corresponding candidate set (the second candidate set). In this case, if the first similarity between a visual feature of the tracklet T5 to be determined and an average visual feature of the two tracklets T2 and T4 currently included in the corresponding candidate set is greater than the first threshold, it may be determined to add the tracklet T5 into the corresponding candidate set.

More specifically, a visual feature of a tracklet is a 1 × w vector. Therefore, an average value of each element in the vector for the tracklet T2 and the corresponding element in the vector for the tracklet T4 may be calculated, and then a 1 × w vector may be obtained as the average visual feature of the tracklets T2 and T4. In a similar manner, an average visual feature of three or more tracklets may be calculated. Besides, a cosine similarity between the average visual feature (1 × w vector) and the visual feature (1 × w vector) of the tracklet T5 to be determined may be calculated as the first similarity. Those skilled in the art may set the first threshold according to a specific situation where the present disclosure is implemented.

Condition 2: in comparison with other tracklets following the tracklet to be determined in the tracklet sequence, a space distance between the tracklet to be determined and the latest tracklet currently included in the corresponding candidate set is shorter.

As an example, it is assumed that the tracklet to be determined is the tracklet T6 in the truncated tracklet sequence {T3, T4, T5, T6,..., TN}, and that the tracklets T3 and T5 out of the tracklets preceding the tracklet T6 have been added into the corresponding candidate set (the third candidate set). In this case, if a space distance between the tracklet T6 to be determined and the latest tracklet T5 currently included in the candidate set is shorter in comparison with other tracklets T7-TN following the tracklet T6, it may be determined to add the tracklet T6 into the candidate set. In particular, if the tracklet to be determined is the last tracklet TN in the above tracklet sequence, the tracklet TN may be determined not to meet Condition 2 since there are no tracklets after the tracklet TN, and it is further determined whether it meets Condition 3 described below.

More specifically, in order to calculate the space distance between two tracklets, a specific position on a target box in an end frame of the earlier one of the two tracklets, such as a midpoint position on the bottom edge of the target box, may be determined first, which is denoted as (x1, y1). Then a corresponding position on a target box in a start frame of the other tracklet (the later one), such as a midpoint position on the bottom edge of the target box, may be determined, which is denoted as (x2, y2). Finally, an Euclidean distance between the two positions (x1, y1) and (x2, y2) is calculated as the space distance between the two tracklets.

The positions (x1, y1) and (x2, y2) determined above may be coordinates in a scene of a video. In order to obtain more accurate positions and distances, the positions (x1, y1) and (x2, y2) may further be mapped to a plane topological map corresponding to the captured scene (for example, a shopping mall), to obtain the mapped positions (x1', y1') and (x2 ', y2'). Then the Euclidean distance between the position (x1', y1') and the position (x2', y2') is calculated as the space distance between the two tracklets.

Condition 3: a second similarity between the tracklet to be determined and the corresponding candidate set is greater than a second threshold. The second similarity is a weighted sum of the first similarity, the space distance between the tracklet to be determined and the latest tracklet currently included in the corresponding candidate set as calculated in Condition 2, and a time distance between the tracklet to be determined and the latest tracklet.

More specifically, for two tracklets at different times, an absolute value of a difference between a start time of the later tracklet and an end time of the earlier tracklet may be calculated as the time distance between the two tracklets. The minimum unit of the time distance may be seconds. Besides, those skilled in the art may determine optimal values of the weights to be applied in calculating the second similarity through experiments, and may set a second threshold value according to a specific situation where the present disclosure is implemented.

When the tracklet to be determined does not meet Condition 1 and Condition 2, it may be determined whether it meets Condition 3. If the calculated second similarity is greater than the second threshold, it may be determined to add the tracklet into the candidate set. If the tracklet to be determined does not meet any of Conditions 1, 2, or 3, the tracklet is skipped and processing continues for the next tracklet in the tracklet sequence.

Moreover, as described above, a tracklet may be a set of target boxes detected in a plurality of frames, and visual feature of each tracklet may be a set of visual features of the respective target boxes. However, some target boxes of the tracklet may be occluded or surround only a part of the target due to being at an edge of a screen, which results in degraded quality of the extracted features. To solve this problem, in the present disclosure, the target boxes in a tracklet are filtered, and a set of features of the selected target boxes that meet predetermined conditions is taken as the feature of the tracklet.

More specifically, in the present disclosure, a target box satisfying the following conditions is selected:
- a size of the target box is greater than a third threshold;
- the target box surrounds a complete target; and
- the target box is not completely or partially occluded; but if all target boxes are at least partially occluded, the occluded area of the target box is less than a fourth threshold.

Similar to the first threshold and the second threshold, those skilled in the art may set the third threshold and the fourth threshold according to a specific situation where the present disclosure is implemented.

The quality of the features of the target boxes may be improved by selecting clear and complete target boxes based on the above conditions. Therefore, the quality of the feature of the tracklet may be improved, which helps to improve the accuracy of subsequent feature-based calculations.

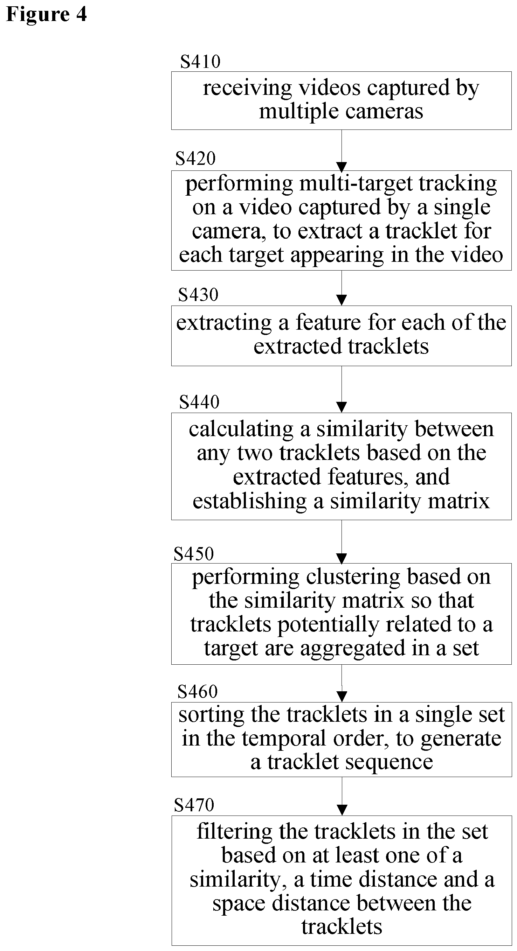

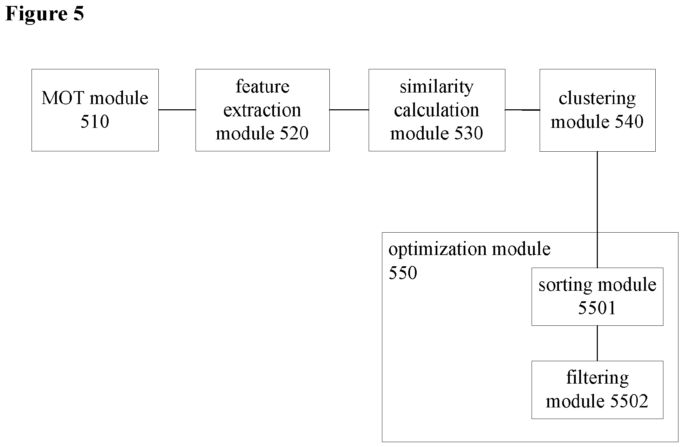

A flowchart of a method for multi-target multi-camera tracking and the functional modules that implement the method according to the present disclosure will be described below in conjunction with Figures 4 and 5.

Referring to Figures 4 and 5, at step S410, the captured videos are received from multiple cameras that capture different scenes respectively, and then at step S420, multi-target tracking is performed on a video captured by a single camera by a multi-target tracking (MOT) module 510, to extract a tracklet for each of multiple targets appearing in the video. In this way, multiple tracklets for multiple targets may be extracted by the MOT module 510 from multiple videos captured by the multiple cameras.

At step S430, a feature is extracted by a feature extraction module 520 for each of the multiple tracklets extracted by the MOT module 510.

At step S440, a similarity between any two of the multiple tracklets extracted by the MOT module 510 is calculated by a similarity calculation module 530 based on the extracted features, to establish a similarity matrix.

At step S450, clustering is performed by a clustering module 540 based on the similarity matrix so that tracklets potentially related to a target are aggregated in a set. The tracklets in the set may be captured by the same camera or different cameras, and generally correspond to the same object. This step achieves preliminary cross-camera association of objects, but the resulted single set may include tracklets corresponding to different objects. Therefore, the set will be optimized by an optimization module 550 so that the set only includes tracklets corresponding to the same object.

Then, at step S460, the tracklets in a single set are sorted in a temporal order by a sorting module 5501 in the optimization module 550, to generate a tracklet sequence.

At step S470, the tracklets in the set are filtered by a filtering module 5502 in the optimization module 550 based on at least one of a similarity, a time distance, and a space distance between the tracklets. The filtered set only includes tracklets of the same object, and these tracklets may be used as tracking information for the corresponding target.

The techniques according to the present disclosure have been described above in conjunction with the detailed description. Compared to conventional technologies that use only visual features, the present disclosure further utilizes the space information and time information of tracklets, and performs optimization process after preliminary cross-camera association, thereby more accurately obtaining tracklets corresponding to each target and improving the accuracy of multi-target multi-camera tracking. Moreover, in the present disclosure, the target boxes in the tracklet are filtered and the quality of the feature of the tracklet may therefore be improved.

The method described in the embodiments may be implemented by software, hardware, or a combination of software and hardware. Programs included in the software may be pre-stored in a storage medium arranged inside or outside an apparatus. As an example, these programs, when being executed, are written to a random access memory (RAM) and executed by a processor (such as CPU) to implement the methods and processes described herein.

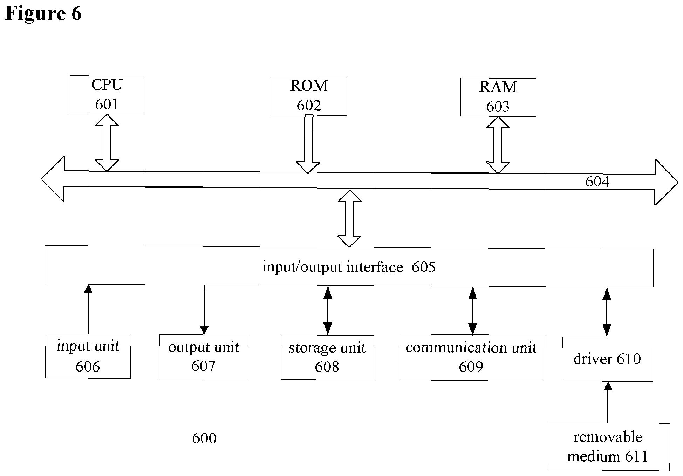

Figure 6 illustrates a block diagram of an exemplary configuration of computer hardware for performing the method of the present disclosure according to a program. A device for multi-target multi-camera tracking according to the present disclosure may be implemented based on the computer hardware.

As shown in Figure 6, in a computer 600, a central processing unit (CPU) 601, a read only memory (ROM) 602, and a random-access memory (RAM) 603 are connected to each other via a bus 604.

An input/output interface 605 is further connected to the bus 604. The input/output interface 605 is connected to the following components: an input unit 606 including a keyboard, a mouse, a microphone or the like; an output unit 607 including a display, a speaker or the like; a storage unit 608 including a hard disk, a non-volatile memory or the like; a communication unit 609 including a network interface card (such as local area network (LAN) card or modem); and a driver 610 that drives a removable medium 611. The removable medium 611 is for example a magnetic disk, an optical disk, a magneto-optical disk, or a semiconductor memory.

In the computer with the above-stated structure, the CPU 601 loads the program stored in the storage unit 608 into the RAM 603 via the input/output interface 605 and the bus 604, and executes the program to perform the method described in the present invention.

The program to be executed by the computer (CPU 601) may be recorded on the removable medium 611 which may be a package medium. The package medium is formed with for example a magnetic disk (including a floppy disk), an optical disk (including a compact disk-read only memory (CD-ROM), a digital versatile disk (DVD) or the like), a magneto-optical disk, or a semiconductor memory. Also, the program to be executed by the computer (CPU 601) may be provided via a wired or wireless transmission medium such as local area network, Internet, or digital satellite broadcast.

When the removable medium 611 is installed in the drive 610, the program may be installed in the storage unit 608 via the input/output interface 605. In addition, the program may be received by the communication unit 609 via a wired or wireless transmission medium, and then the program may be installed in the storage unit 608. Alternatively, the program may be pre-installed in the ROM 602 or the storage unit 608.

The program to be executed by the computer may be a program that performs processes in the order described in the present disclosure, or may be a program that performs processes in parallel or when necessary (e.g., when invoked).

The units or devices described herein are only in logical sense, and do not strictly correspond to physical devices or entities. For example, the function of each unit described herein may be implemented by multiple physical entities. Alternatively, functions of several units described herein may be implemented by a single physical entity. In addition, features, components, elements, steps or the like described in one embodiment are not limited to the embodiment, but may also be applied in other embodiments by for example replacing or combining with specific features, components, elements, steps or the like in other embodiments.

The scope of the present disclosure is not limited to the embodiments described herein. Those skilled in the art should understand that, depending on design requirements and other factors, various modifications or changes may be made to the embodiments herein without departing from principle of the present invention. The scope of the invention is defined by the appended claims and their equivalents.

### Appendix

(1) A method for multi-target multi-camera tracking, comprising:
   performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras;
   extracting a feature for each of the plurality of tracklets;
   calculating a similarity between any two of the plurality of tracklets based on the extracted features, to establish a similarity matrix;
   performing clustering based on the similarity matrix so that tracklets potentially related to a target are aggregated in a set, wherein the tracklets in the set are captured by the same camera or different cameras;
   sorting the tracklets in the set in a temporal order to generate a tracklet sequence;
   filtering the tracklets in the set based on at least one of a similarity, a time distance, and a space distance between the tracklets; and
   using the tracklets in the filtered set as tracking information for the corresponding target.
(2) The method according to claim 1, wherein the method further comprises:
   a) sequentially determining whether to add each tracklet in the tracklet sequence into a candidate set;
   b) removing the earliest tracklet in the tracklet sequence to truncate the tracklet sequence;
   c) sequentially determining whether to add each tracklet in the truncated tracklet sequence into another candidate set;
   d) further truncating the truncated tracklet sequence;
   e) iteratively performing steps c) and d), until a value obtained by subtracting 1 from the number of tracklets in the current truncated tracklet sequence in the step c) is less than or equal to the maximum number of tracklets in respective candidate sets currently obtained; and
   f) taking the candidate set including the maximum number of tracklets among the obtained candidate sets as the filtered set.
(3) The method according to claim 2, wherein it is determined to add a tracklet into the corresponding candidate set only when one of the following conditions is met:
   a first similarity between the feature of the tracklet and an average feature of tracklets currently included in the corresponding candidate set is greater than a first threshold;
   in comparison with other tracklets following the tracklet in the same tracklet sequence, a space distance between the tracklet and the latest tracklet currently included in the corresponding candidate set is shorter; and
   a second similarity between the tracklet and the corresponding candidate set is greater than a second threshold, wherein the second similarity is a weighted sum of the first similarity, the space distance between the tracklet and the latest tracklet currently included in the corresponding candidate set, and a time distance between the tracklet and the latest tracklet.
(4) The method according to claim 1, wherein the tracklet extracted for each target appearing in the image sequence is a set of target boxes that identify the target in a plurality of frames of the image sequence respectively, and wherein the feature extracted for the tracklet is a set of features that are extracted for the target boxes respectively.
(5) The method according to claim 4, wherein a space distance between two tracklets at different times is an Euclidean distance between a certain position on a target box in an end frame of the earlier one of the two tracklets and a corresponding position on a target box in a start frame of the later one of the two tracklets.
(6) The method according to claim 5, further comprising:
   mapping the certain position on the target box in the end frame of the earlier tracklet and the corresponding position on the target box in the start frame of the later tracklet to a plane topological map corresponding to the captured scene, respectively; and
   calculating the Euclidean distance between the mapped positions as the space distance between the two tracklets.
(7) The method according to claim 4, further comprising:
   selecting a target box satisfying the following conditions among the target boxes included in the tracklet:
      a size of the target box is greater than a third threshold;
      the target box surrounds a complete target;
      the target box is not occluded;
      if all target boxes in the tracklet are at least partially occluded, an occluded area of the target box is less than a fourth threshold,
      and
   taking a set of features extracted for the selected target boxes as the feature of the tracklet.
(8) The method according to claim 4, wherein the any two of the plurality of tracklets include a first tracklet and a second tracklet, and wherein the step of calculating the similarity between the any two tracklets further comprises:
   calculating a similarity between a feature of each target box in the first tracklet and a feature of each target box in the second tracklet;
   selecting, based on a descending order of the calculated similarities, a predetermined number of similarities in front; and
   calculating an average of the selected similarities, and taking the average as a similarity between the first tracklet and the second tracklet.
(9) A device for multi-target multi-camera tracking, comprising:
   a memory storing a computer program; and
   a processor configured to execute the computer program to perform operations of:
      performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras;
      extracting a feature for each of the plurality of tracklets;
      calculating a similarity between any two of the plurality of tracklets based on the extracted features, to establish a similarity matrix;
      performing clustering based on the similarity matrix so that tracklets potentially related to a target are aggregated in a set, wherein the tracklets in the set are captured by the same camera or different cameras;
      sorting the tracklets in the set in a temporal order to generate a tracklet sequence;
      filtering the tracklets in the set based on at least one of a similarity, a time distance, and a space distance between the tracklets; and
      using the tracklets in the filtered set as tracking information for the corresponding target.
(10) The device according to claim 9, wherein the processor is further configured to:
   a) sequentially determine whether to add each tracklet in the tracklet sequence into a candidate set;
   b) remove the earliest tracklet in the tracklet sequence to truncate the tracklet sequence;
   c) sequentially determine whether to add each tracklet in the truncated tracklet sequence into another candidate set;
   d) further truncate the truncated tracklet sequence;
   e) iteratively perform steps c) and d), until a value obtained by subtracting 1 from the number of tracklets in the current truncated tracklet sequence in the step c) is less than or equal to the maximum number of tracklets in respective candidate sets currently obtained; and
   f) take the candidate set including the maximum number of tracklets among the obtained candidate sets as the filtered set.
(11) The device according to claim 10, wherein the processor is further configured to determine to add a tracklet into the corresponding candidate set only when one of the following conditions is met:
   a first similarity between the feature of the tracklet and an average feature of tracklets currently included in the corresponding candidate set is greater than a first threshold;
   in comparison with other tracklets following the tracklet in the same tracklet sequence, a space distance between the tracklet and the latest tracklet currently included in the corresponding candidate set is shorter; and
   a second similarity between the tracklet and the corresponding candidate set is greater than a second threshold, wherein the second similarity is a weighted sum of the first similarity, the space distance between the tracklet and the latest tracklet currently included in the corresponding candidate set, and a time distance between the tracklet and the latest tracklet.
(12) The device according to claim 9, wherein the tracklet extracted for each target appearing in the image sequence is a set of target boxes that identify the target in a plurality of frames of the image sequence respectively, and wherein the feature extracted for the tracklet is a set of features that are extracted for the target boxes respectively.
(13) The device according to claim 12, wherein a space distance between two tracklets at different times is an Euclidean distance between a certain position on a target box in an end frame of the earlier one of the two tracklets and a corresponding position on a target box in a start frame of the later one of the two tracklets.
(14) The device according to claim 13, wherein the processor is further configured to:
   map the certain position on the target box in the end frame of the earlier tracklet and the corresponding position on the target box in the start frame of the later tracklet to a plane topological map corresponding to the captured scene, respectively; and
   calculate the Euclidean distance between the mapped positions as the space distance between the two tracklets.
(15) The device according to claim 12, wherein the processor is further configured to select a target box satisfying the following conditions among the target boxes included in the tracklet:
   a size of the target box is greater than a third threshold;
   the target box surrounds a complete target;
   the target box is not occluded;
   if all target boxes in the tracklet are at least partially occluded, an occluded area of the target box is less than a fourth threshold,
   and
   the processor is further configured to take a set of features extracted for the selected target boxes as the feature of the tracklet.
(16) The device according to claim 12, wherein the any two of the plurality of tracklets include a first tracklet and a second tracklet, and wherein the processor is further configured to:
   calculate a similarity between a feature of each target box in the first tracklet and a feature of each target box in the second tracklet;
   select, based on a descending order of the calculated similarities, a predetermined number of similarities in front; and
   calculate an average of the selected similarities, and take the average as a similarity between the first tracklet and the second tracklet.
(17) A non-transitory computer-readable storage medium storing a program that, when executed by a computer, causes the computer to perform the method for multi-target multi-camera tracking according to any one of (1) to (8).

## Claims

1. A method for multi-target multi-camera tracking, comprising:
performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras;
extracting a feature for each of the plurality of tracklets;
calculating a similarity between any two of the plurality of tracklets based on the extracted features, to establish a similarity matrix;
performing clustering based on the similarity matrix so that tracklets potentially related to a target are aggregated in a set, wherein the tracklets in the set are captured by the same camera or different cameras;
sorting the tracklets in the set in a temporal order to generate a tracklet sequence;
filtering the tracklets in the set based on at least one of a similarity, a time distance, and a space distance between the tracklets; and
using the tracklets in the filtered set as tracking information for the corresponding target.

2. The method according to claim 1, wherein the method further comprises:
a) sequentially determining whether to add each tracklet in the tracklet sequence into a candidate set;
b) removing the earliest tracklet in the tracklet sequence to truncate the tracklet sequence;
c) sequentially determining whether to add each tracklet in the truncated tracklet sequence into another candidate set;
d) further truncating the truncated tracklet sequence;
e) iteratively performing steps c) and d), until a value obtained by subtracting 1 from the number of tracklets in the current truncated tracklet sequence in the step c) is less than or equal to the maximum number of tracklets in respective candidate sets currently obtained; and
f) taking the candidate set including the maximum number of tracklets among the obtained candidate sets as the filtered set.

3. The method according to claim 2, wherein it is determined to add a tracklet into the corresponding candidate set only when one of the following conditions is met:
a first similarity between the feature of the tracklet and an average feature of tracklets currently included in the corresponding candidate set is greater than a first threshold;
in comparison with other tracklets following the tracklet in the same tracklet sequence, a space distance between the tracklet and the latest tracklet currently included in the corresponding candidate set is shorter; and
a second similarity between the tracklet and the corresponding candidate set is greater than a second threshold, wherein the second similarity is a weighted sum of the first similarity, the space distance between the tracklet and the latest tracklet currently included in the corresponding candidate set, and a time distance between the tracklet and the latest tracklet.

4. The method according to claim 1, wherein the tracklet extracted for each target appearing in the image sequence is a set of target boxes that identify the target in a plurality of frames of the image sequence respectively, and wherein the feature extracted for the tracklet is a set of features that are extracted for the target boxes respectively.

5. The method according to claim 4, wherein a space distance between two tracklets at different times is an Euclidean distance between a certain position on a target box in an end frame of the earlier one of the two tracklets and a corresponding position on a target box in a start frame of the later one of the two tracklets.

6. The method according to claim 5, further comprising:
mapping the certain position on the target box in the end frame of the earlier tracklet and the corresponding position on the target box in the start frame of the later tracklet to a plane topological map corresponding to the captured scene, respectively; and
calculating the Euclidean distance between the mapped positions as the space distance between the two tracklets.

7. The method according to claim 4, further comprising:
selecting a target box satisfying the following conditions among the target boxes included in the tracklet:
a size of the target box is greater than a third threshold;
the target box surrounds a complete target;
the target box is not occluded;
if all target boxes in the tracklet are at least partially occluded, an occluded area of the target box is less than a fourth threshold,
and
taking a set of features extracted for the selected target boxes as the feature of the tracklet.

8. The method according to claim 4, wherein the any two of the plurality of tracklets include a first tracklet and a second tracklet, and wherein the step of calculating the similarity between the any two tracklets further comprises:
calculating a similarity between a feature of each target box in the first tracklet and a feature of each target box in the second tracklet;
selecting, based on a descending order of the calculated similarities, a predetermined number of similarities in front;
calculating an average of the selected similarities, and taking the average as a similarity between the first tracklet and the second tracklet.

9. A device for multi-target multi-camera tracking, comprising:
a memory storing a computer program; and
a processor configured to execute the computer program to perform operations of:
performing multi-target single-camera tracking on an image sequence captured by each of a plurality of cameras that respectively capture different scenes, to extract a tracklet for each target appearing in the image sequence, wherein a plurality of tracklets are extracted for a plurality of targets appearing in a plurality of image sequences captured by the plurality of cameras;
extracting a feature for each of the plurality of tracklets;
calculating a similarity between any two of the plurality of tracklets based on the extracted features, to establish a similarity matrix;
performing clustering based on the similarity matrix so that tracklets potentially related to a target are aggregated in a set, wherein the tracklets in the set are captured by the same camera or different cameras;
sorting the tracklets in the set in a temporal order to generate a tracklet sequence;
filtering the tracklets in the set based on at least one of a similarity, a time distance, and a space distance between the tracklets; and
using the tracklets in the filtered set as tracking information for the corresponding target.

10. A non-transitory computer-readable storage medium storing a program that, when executed by a computer, causes the computer to perform the method for multi-target multi-camera tracking according to any one of claims 1 to 8.
